# EUROPÄISCHE PATENTANMELDUNG

(11) **EP 2 263 435 A1**
(43) Veröffentlichungstag der Anmeldung: **22.12.2010**
(21) Anmeldenummer: 09163123.4
(22) Anmeldetag: 18.06.2009
(51) Int. Cl.: A01B 35/22

(54) **Vorrichtung zum Auflockern von Erdreich**

(71) Anmelder: Einböck GmbH & Co. KG, 4751 Dorf/Pram (AT)
(72) Erfinder: Unterortner, Johann, 4752, Riedau (AT)
(74) Vertreter: Vogeser, Werner

(57) **Zusammenfassung**

Es wird eine Vorrichtung zum Auflockern von Erdreich beschrieben, die wenigstens einen Zinken (2), wenigstens einen Kniehebel (11) aufweisend einen vorderen Kniehebelarm (3) und einen hinteren Kniehebelarm (4), die über ein Kniehebelgelenk (5) gelenkig miteinander verbunden sind, sowie wenigstens eine Druckfeder (6) umfasst, die mit ihrem einen Ende an dem Kniehebel (11) angreift, wobei der Zinken (2) zwischen einer Arbeitsstellung, in welcher er mit einer Arbeitstiefe in das Erdreich eindringen kann und in welcher die Druckfeder (6) den Kniehebel in einer ersten Stellung hält, und einer Ausweichstellung, in welcher er entgegen der Federkraft der Druckfeder (6) einem Hindernis in dem Erdreich ausweichen kann und in welcher sich der Kniehebel in einer zweiten Stellung befindet, bewegbar ist. Diese Vorrichtung soll derart weitergebildet werden, dass die Vorrichtung einen druckfederbeaufschlagten Kniehebelmechanismus aufweist, der es dem wenigstens einen Zinken (2) der Vorrichtung ermöglicht, einerseits Hindernissen im Erdreich auszuweichen und andererseits das Risiko von geschossartig weg geschleuderten Bauteilen im Falle einer Fehlfunktion zu minimieren. Zur Lösung dieser Aufgabe wird vorgeschlagen, wenigstens einen Zinkenträger (7) vorzusehen, der den Zinken (2) trägt und einen Aufnahmehohlraum zur Aufnahme der Druckfeder (6) aufweist, in welchem die Druckfeder (6) derart gelagert ist, dass der Zinkenträger (7) diejenigen Zugkräfte aufnimmt, die zur Aufrechterhaltung der Federkraft der Druckfeder (6) in der Arbeitsstellung und in der Ausweichstellung des Zinkens (2) erforderlich sind.

## Beschreibung

### I. Anwendungsgebiet

Die vorliegende Erfindung betrifft eine Vorrichtung zum Auflockern von Erdreich. Mehrere Vorrichtungen der in Rede stehenden Art können beispielsweise einen so genannten Grubber bilden, der insbesondere im Rahmen der landwirtschaftlichen Auflockerung von Erdreich zur Anwendung kommt. Bei einem Grubber handelt es sich um ein das Erdreich nicht wendendes Gerät, das auch als Feingrubber, Kultivator oder Krümmer bezeichnet wird.

### II. Technischer Hintergrund

Grubber der in Rede stehenden Art werden zum Auflockern des Erdreiches regelmäßig an den hinteren Enden von Zugfahrzeugen, beispielsweise Traktoren, befestigt und mit Hilfe des Zugfahrzeuges durch das Erdreich gezogen. Dabei bewegen sich mehrere Zinken, die jeweils eine Schar oder mehrere Scharen tragen, durch das Erdreich und lockern es auf.

Je nach geographischer Region ist das aufzulockernde Erdreich mehr oder weniger von harten Hindernissen, beispielsweise Steinbrocken oder ähnlichem, durchsetzt. Zur Vermeidung von Beschädigungen an dem Grubber für den Fall, dass die an den Zinken angeordneten Scharen auf ein derartiges Hindernis auflaufen, gibt es im Stand der Technik eine Vielzahl von Mechanismen, die bewirken, dass die Zinken zusammen mit den Scharen dem Hindernis ausweichen und danach während der Weiterfahrt des Zugfahrzeuges wieder in ihre Arbeitsstellung mit derjenigen Eindringtiefe in das Erdreich zurückkehren, in der sich die Zinken bereits vor dem Auflaufen auf das Hindernis befunden haben.

Ein Beispiel einer Vorrichtung zum Auflockern von Erdreich mit einem derartigen Mechanismus ist aus der US 2,312,405 bekannt. In den Fig. 1 und 2 dieses Dokuments ist eine Vorrichtung gezeigt, die einen Kniehebel aufweist, welcher aus einem in Fahrtrichtung des Zugfahrzeuges vorderen Kniehebelarm 6 sowie einem hinteren Kniehebelarm 19, 20 besteht. Der hintere Kniehebelarm besteht aus zwei Teilen 19, 20, die im Betrieb der Vorrichtung starr miteinander verbunden sind. Der hintere Kniehebelarm 19, 20 bildet gleichzeitig einen Zinken, der an seinem dem Erdreich zugewandten Ende eine Schar S trägt. Der vordere Kniehebelarm 6 und der hintere Kniehebelarm 19, 20 sind über ein Kniehebelgelenk 14 gelenkig miteinander verbunden. Ein Gelenkhebel 4 ist einerseits gelenkig an einer Halterung 2 angebracht und andererseits gelenkig mit dem hinteren Kniehebelarm 19, 20 verbunden. Das von dem Kniehebelgelenk 14 abgewandte Ende des vorderen Kniehebelarms 6 ist ebenso gelenkig mit der Halterung 2 verbunden.

Bei der bekannten Vorrichtung trägt eine Stange 36 eine vorgespannte Druckfeder 31. Die Stange 36 ist letztendlich über ein Gelenk 34 gelenkig mit dem Gelenkhebel 4 verbunden. Das Kniehebelgelenk 14 kann in dem Schlitz 35 einer Trägerstange 32 gleiten, die mit der Stange 36 fest verbunden ist.

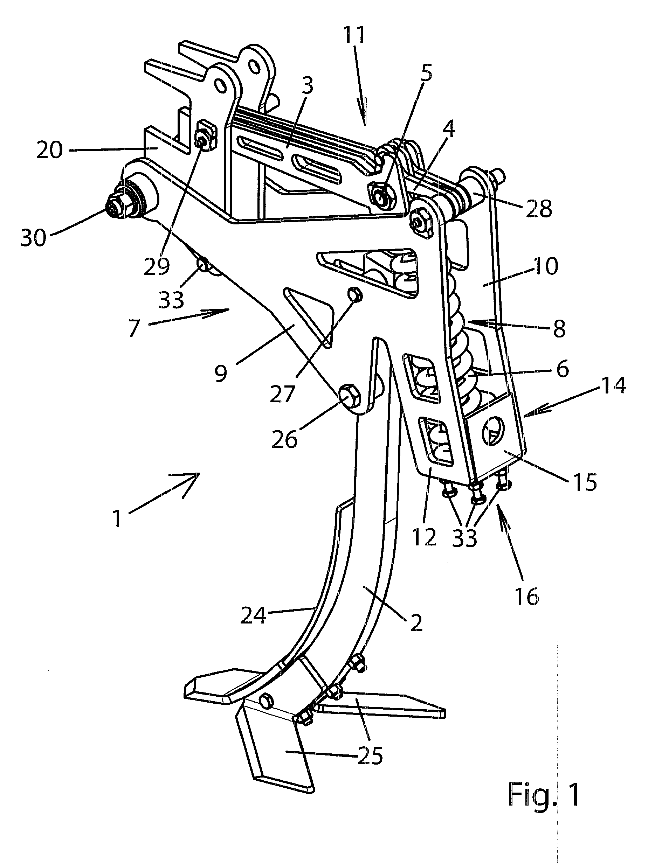

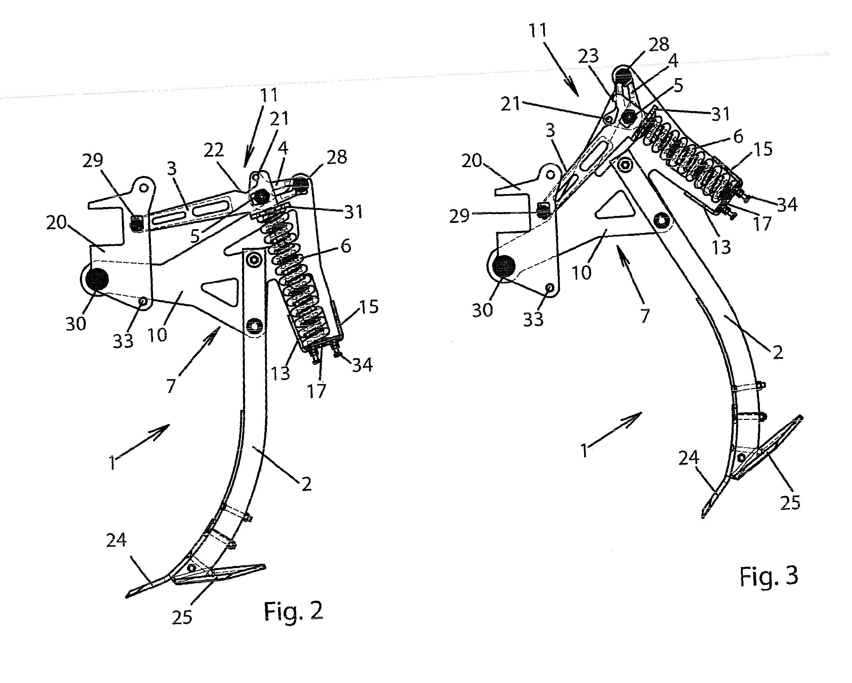

In der in Fig. 1 der US 2,312,405 gezeigten Arbeitsstellung der Vorrichtung, in welcher die Schar S mit einer Soll-Eindringtiefe durch das Erdreich bewegt wird, drückt die vorgespannte Druckfeder 31 den Kniehebel 6/19,20 in eine erste Stellung. In der in Fig. 2 der US 2,312,405 gezeigten Ausweichstellung der Vorrichtung ist die Schar S aufgrund des Auflaufens auf ein Hindernis R nach hinten und oben weggeschwenkt, wobei während dieser Schwenkbewegung der Kniehebel 6/19,20 zunehmend einknickt und das Kniehebelgelenk 14 die Druckfeder 31 zunehmend komprimiert. In der maximal nach hinten und oben weg geschwenkten Position der Schar S befindet sich der Kniehebel 6/19,20 in einer der Ausweichstellung der Vorrichtung zugeordneten zweiten Stellung. Sobald die Schar S das Hindernis R überwunden hat, bewirkt die in der Ausweichstellung stärker komprimierte Druckfeder 31, dass sich der Kniehebel 6/19,20 von seiner zweiten Stellung in seine erste Stellung bewegt und die Vorrichtung letztendlich wieder ihre in Fig. 1 dargestellte Arbeitsstellung einnimmt.

Bei der bekannten Vorrichtung übt die Druckfeder 31 erhebliche Druckkräfte aus, die in Form von entsprechend großen Zugkräften von der Stange 31 sowie der Trägerstange 32 aufgenommen werden. Es ist in diesem Zusammenhang nachteilig, dass die Querschnitte der Stange 36 und der Trägerstange 32 nicht immer so groß gewählt werden können, wie es im Hinblick auf eine hohe mechanische Sicherheit gegen einen Bruch dieser Bauelemente wünschenswert wäre. Wenn bei der bekannten Vorrichtung die Stange 36 oder die Trägerstange 32 bricht, so wird die Druckfeder 31 geschossartig in die Umgebung geschleudert, was für dort befindliche Personen oder Gegenstände ein erhebliches Sicherheitsrisiko darstellt.

### III. Darstellung der Erfindung

### a) Technische Aufgabe

Es ist daher die Aufgabe der vorliegenden Erfindung, eine Vorrichtung zum Auflockern von Erdreich zu schaffen, die einen druckfederbeaufschlagten Kniehebelmechanismus aufweist, der es dem wenigstens einen Zinken der Vorrichtung ermöglicht, einerseits Hindernissen im Erdreich auszuweichen und andererseits das Risiko von geschossartig weg geschleuderten Bauteilen im Falle einer Fehlfunktion zu minimieren.

### b) Lösung der Aufgabe

Diese Aufgabe wird mittels einer Vorrichtung mit den Merkmalen des Anspruchs 1 gelöst. Weitere Ausgestaltungen der vorliegenden Erfindung ergeben sich aus den Unteransprüchen.

Erfindungsgemäß wird eine Vorrichtung zum Auflockern von Erdreich vorgeschlagen, die wenigstens einen zusammen mit dem Zinken verschwenkbaren Zinkenträger aufweist, welcher mit einem Aufnahmehohlraum zur Aufnahme der Druckfeder versehen ist. Die wenigstens eine Druckfeder ist in dem Aufnahmehohlraum derart gelagert, dass der Zinkenträger diejenigen Zugkräfte aufnimmt, die zur Aufrechterhaltung der Federkraft der Druckfeder in der Arbeitsstellung, in der Ausweichstellung oder in einer beliebigen Zwischenstellung des Zinken zwischen der Arbeits- und der Ausweichstellung erforderlich sind. Da der Zinkenträger die Druckfeder gehäuseartig umgibt, können die Querschnitte seiner Wandungen ohne Weiteres derart ausgebildet werden, dass er die von der Druckfeder induzierten Zugkräfte mit einem hohen mechanischen Sicherheitsfaktor aufnehmen kann. Der Zinkenträger kann zur Ausbildung des Aufnahmehohlraums für die Druckfeder ein- oder mehrteilig gestaltet sein.

Der Vorteil der vorliegenden Erfindung besteht darin, dass die unter Vorspannung stehende Druckfeder sicher in dem mechanisch hochfest gestaltbaren Zinkenträger gehaltert ist und daher die Gefahr, dass sie geschoßartig in die Umgebung weggeschleudert wird, nahezu ausgeräumt ist. Die Lagerung der Druckfeder in dem Aufnahmehohlraum des Zinkenträgers bietet darüber hinaus den weiteren Vorteil, dass - abweichend von der aus der US 2,312,405 bekannten Vorrichtung (siehe dort in dem Schlitz 35 der Trägerstange 32 gleitendes Kniehebelgelenk 14) - keine Bauteile mehr vorgesehen werden müssen, die relativ zueinander eine mit Reibung behaftete Linearbewegung ausführen müssen. Die vorliegende Erfindung ermöglicht dadurch eine verschleißarme Bauweise.

Der Zinkenträger umfasst vorzugsweise zwei im Wesentlichen parallel zueinander angeordnete Trägerplatten, zwischen denen sich der Aufnahmehohlraum für die wenigstens eine Druckfeder befindet. Zum Zwecke der Gewichtsersparnis können die Trägerplatten mit einem Durchbruch oder jeweils mehreren Durchbrüchen versehen sein. Die Größe der Durchbrüche ist jedoch stets derart gestaltet, dass sie für den Durchtritt der Druckfeder zu klein sind.

Zumindest in demjenigen Bereich des Aufnahmehohlraumes, der zur Aufnahme des dem Kniehebel abgewandten Ende der Druckfeder bestimmt ist, können allseitig Wandungen zur Führung des dem Kniehebel abgewandten Endes der Druckfeder vorgesehen sein. Es ist jedoch auch denkbar, den Aufnahmehohlraum für die Druckfeder über seine gesamte Länge hinweg, die der Länge der Druckfeder entspricht, allseitig mit Wandungen zu verschließen. Als weitere Alternative ist denkbar, den Aufnahmehohlraum für die Druckfeder zumindest auf einer Seite mit Hilfe des dem Erdreich abgewandten Endes des Zinken zu verschließen bzw. gegenüber der Umgebung abzugrenzen.

In vorteilhafter Weise werden zwei der Wandungen zur Führung des dem Kniehebel abgewandten Endes der Druckfeder von entsprechenden Teilbereichen der parallel zueinander angeordneten Trägerplatten gebildet. Zwei weitere Wandungen der Wandungen zur Führung des dem Kniehebel abgewandten Endes der Druckfeder können vorzugsweise von den Schenkeln eines U-förmig gebogenen Abstützteils gebildet werden, wobei der die beiden Schenkel verbindende Steg des Abstützteils das dem Kniehebel abgewandte Ende der Druckfeder abstützt.

Besonders vorteilhaft ist es, den Zinkenträger derart zu gestalten, dass der Aufnahmehohlraum zur Aufnahme der Druckfeder auf der dem Erdreich zugewandten Seite des Kniehebels zu liegen kommt. Auf diese Weise wird verhindert, dass dann, wenn der Zinkenträger wider Erwarten doch brechen sollte, die Druckfeder nicht nach oben weggeschleudert werden und dadurch in der Umgebung befindliche Person gefährden kann.

Die sichere Führung der Druckfeder erfolgt an ihrem den Kniehebel zugewandten Ende mit Hilfe wenigstens eines Führungsstiftes, der in die vorzugsweise als Spiralfeder ausgebildete Druckfeder eingreift. Dabei ist die Länge des Führungsstiftes vorzugsweise kleiner als die halbe Länge der in der Arbeitsstellung komprimierten Druckfeder.

Um die Rückstellkraft, welche den Zinken von der Ausweichstellung in die Arbeitsstellung zurückstellt, weiter zu erhöhen, kann zusätzlich zu der Druckfeder wenigstens eine weitere Druckfeder vorgesehen werden. Die weitere Druckfeder kann in der Arbeitsstellung des Zinken drucklos - d.h. in ihrer noch nicht komprimierten Neutralstellung befindlich - sein und erst während der Bewegung des Zinken von seiner Arbeitsstellung in seine Ausweichstellung beginnen, eine zusätzlich wirkende Druckkraft auf den Kniehebel auszuüben. Diese Wirkung der weiteren Druckfeder kann vorzugsweise dadurch erreicht werden, dass die Länge der in ihrer Neutralposition befindlichen weiteren Druckfeder kleiner gewählt wird als die Länge der vorgespannten Druckfeder in demjenigen Zustand, welcher der Arbeitsstellung des Zinken zugeordnet ist. Die derartig ausgelegte weitere Druckfeder trägt erst dann einen Beitrag zur Erzeugung der Rückstellkraft bei, wenn die vorgespannte Druckfeder während der Bewegung von der Arbeitsstellung in die Ausweichstellung um denjenigen Federweg komprimiert wurde, welcher der Differenz der Längen der beiden Druckfedern entspricht. Erst nachdem die komprimierte Druckfeder um diesen zusätzlichen Federweg komprimiert wurde, erreicht das von dem Kniehebel abgewandte Ende der weiteren Druckfeder die entsprechende Abstützfläche in dem Aufnahmehohlraum des Zinkenträgers und wird ihrerseits komprimiert. Alternativ ist denkbar, die Längen der Druckfeder sowie der weiteren Druckfeder gleich lang auszubilden, so dass beide Druckfedern bereits in der Arbeitsstellung vorgespannt sind.

Um den Aufnahmehohlraum in dem Zinkenträger möglichst klein gestalten zu können, ist die weitere Druckfeder vorzugsweise innerhalb der bereits vorgespannten Druckfeder angeordnet. Der Führungsstift kann in diesem Fall in die vorzugsweise ebenso als Spiralfeder ausgebildete weitere Druckfeder eingreifen.

Der Kniehebel der erfindungsgemäßen Vorrichtung weist einen in Fahrtrichtung des Zugfahrzeuges vorderen Kniehebelarm sowie einen in Fahrtrichtung des Zugfahrzeuges hinteren Kniehebelarm auf. Das von dem Kniehebelgelenk abgewandte Ende des hinteren Kniehebelarms ist gelenkig mit dem Zinkenträger verbunden. Darüber hinaus ist der Zinkenträger an seinem in Fahrtrichtung des Zugfahrzeuges vorderen Ende gelenkig mit einer Halterung verbunden, die zur Befestigung an einem so genannten Balken dient, der seinerseits an dem Zugfahrzeug befestigt wird. Auch das von dem Kniehebelgelenk abgewandte Ende des vorderen Kniehebelarms ist gelenkig mit dieser Halterung verbunden.

Vorzugsweise weist der hintere Kniehebelarm des Kniehebels einen Anschlagvorsprung auf, der in einer der Arbeitsstellung des Zinkens zugeordneten ersten Stellung des Kniehebels an einer ersten Anschlagfläche des vorderen Kniehebelarms anschlägt. In einer der Ausweichstellung des Zinkens zugeordneten zweiten Stellung des Kniehebels schlägt der Anschlagvorsprung an einer zweiten Anschlagfläche des vorderen Kniehebels an. Somit beschränkt der mit der ersten und der zweiten Anschlagfläche zusammenwirkende Anschlagvorsprung den maximal möglichen Relativschwenkwinkel zwischen dem vorderen Kniehebelarm und dem hinteren Kniehebelarm des Kniehebels. Vorzugsweise ist der Kniehebel der erfindungsgemäßen Vorrichtung in seiner ersten Stellung fast vollständig gestreckt. Der vordere Kniehebelarm und der hintere Kniehebelarm bilden bei dieser Ausrichtung nicht exakt, aber nahezu eine Gerade. Dabei weist der dementsprechend auch in der ersten Stellung stets vorhandene Knick des Kniehebels nach unten in Richtung des Erdreichs, um zu gewährleisten, dass das Ausknicken des Kniehebels von seiner ersten Stellung in seine zweite Stellung stets nach unten in Richtung des Erdreichs erfolgt.

### c) Ausführungsbeispiel

Nachfolgend wird eine Ausführungsform der vorliegenden Erfindung beispielhaft anhand der beigefügten Zeichnungen beschrieben. Es zeigen:
- Fig. 1:: eine perspektivische Ansicht einer Ausführungsform der erfindungsgemäßen Vorrichtung;
- Fig. 2:: eine Seitenansicht der in Fig. 1 gezeigten Vorrichtung in ihrer Arbeitsstel- lung, wobei ein Teil des Zinkenträgers zur besseren Sichtbarkeit der Druck- feder weggelassen wurde;
- Fig. 3:: eine Seitenansicht der in Fig. 1 gezeigten Vorrichtung in ihrer ausgelösten Ausweichstellung, wobei ein Teil des Zinkenträgers zur besseren Sichtbar- keit der Druckfeder weggelassen wurde;
- Fig. 4:: eine Aufsicht auf die in Fig. 1 gezeigte Vorrichtung in der gedachten Fahrtrichtung eines die Vorrichtung ziehenden Zugfahrzeugs gesehen; und
- Fig. 5:: eine Schnittansicht der in Fig. 4 gezeigten Vorrichtung gemäß Schnitt A-A.

Fig. 1 zeigt die Ausführungsform der erfindungsgemäßen Vorrichtung 1 zum Auflockern von Erdreich in perspektivischer Darstellung. Mehrere dieser Vorrichtungen 1 bilden zusammen mit zugehörigen Balken in Nebeneinander- und/oder Hintereinanderanordnung einen so genannten Grubber, der als landwirtschaftliches und das Erdreich nicht wendendes Gerät an einem Traktor befestigt und mit Hilfe des Traktors durch das Erdreich gezogen wird.

Die gezeigte Vorrichtung 1 weist einen gekrümmten Zinken 2 auf, der an seinem in Fig. 1 unteren Ende, das zum Eindringen in das Erdreich bestimmt ist, mit einer Schmalschar 24 sowie mit einer Flügelschar 25 versehen. Der Zinken 2 ist mit Hilfe einer Schraube 26 und einer weiteren Schraube (Scherbolzen) 27 drehfest an einem Zinkenträger 7 befestigt.

Bei der gezeigten Ausführungsform besteht der Zinkenträger 7 aus zwei mit Abstand parallel zueinander angeordneten Trägerplatten 9 und 10 sowie einem U-förmig gebogenen Abstützteil 16, wobei die U-Form besser in den Fig. 2, 3 und 5 zu erkennen ist. Die beiden Trägerplatten 9 und 10 sind identisch gestaltet und weisen in der Aufsicht eine pistolenartige Form auf. Zur Gewichtsersparnis ist jede Trägerplatte 9, 10 mit insgesamt vier in den Fig. zu erkennenden, jedoch nicht näher bezeichneten Durchbrüchen versehen. Wie in Fig. 1 zu erkennen ist, befindet sich zwischen den Trägerplatten 9 und 10 ein Hohlraum, der teilweise als Aufnahmehohlraum zur Aufnahme einer Druckfeder 6 fungiert.

Das in Fig. 1 gezeigte untere Ende der vorgespannten Druckfeder 6 stützt sich an dem U-förmig gebogenen Abstützteil 16 ab. Hierzu ist letzteres bei der gezeigten Ausführungsform zwischen die beiden Trägerplatten 9, 10 geschweißt. Das in Fig. 1 untere Ende der Druckfeder 6 stützt sich dabei mittelbar oder unmittelbar an dem in den Fig. 2, 3 und 5 besser zu erkennenden Steg 17 des Abstützteils 16 ab. Darüber hinaus wird das in Fig. 1 untere Ende der Druckfeder 6 seitlich von Wandungen 12, 13, 14 und 15 geführt, die den Aufnahmehohlraum 8 in dem Bereich des in Fig. 1 unteren Endes der Druckfeder 6 allseitig umschließen. Die Wandungen 12 und 14 bilden bei der gezeigten Ausführungsform einen jeweils integralen Bestandteil der Trägerplatte 9 bzw. der Trägerplatte 10. Alternativ ist denkbar, zumindest einen Teil derjenigen Wandungen des Zinkenträgers 7, die den Aufnahmehohlraum 8 begrenzen, als separates Bauteil auszubilden und dieses Bauteil lösbar oder unlösbar mit den anderen Wandungen des Zinkenträgers 7 zu verbinden. Beispielsweise könnte der in Fig. 1 gezeigte taschen- oder pistolengriffartige Bereich des Zinkenträgers 7, der die untere Hälfte des Aufnahmehohlraums 8 abgrenzt, als separates Bauteil ausgebildet werden, das an die anderen Wandungen des Zinkenträgers 7 angeschweißt oder angeschraubt wird.

Bevorzugt ist, dass die Trägerplatten 9 und 10 jeweils einstückig ausgebildet sind, so dass die beiden Wandungen 12 und 14, die den in Fig. 1 unteren Bereich des Aufnahmehohlraums 8 einander gegenüberliegend begrenzen, integrale Teilbereiche der Trägerplatte 9 bzw. 10 bilden. Für die Trägerplatten 9 und 10 können solche Wandstärken gewählt werden, dass die den Aufnahmehohlraum 8 begrenzenden Wandungen des Zinkenträgers 7 die von der Druckfeder 6 induzierten Zugkräfte mit ausreichendem mechanischem Sicherheitsfaktor aufnehmen können. Diese Zugkräfte werden über das Abstützteil 16 in die Trägerplatten 9 und 10 übertragen. In vorteilhafter Weise besteht für den Fall, dass eine stärker vorgespannte Druckfeder 6 zum Einsatz kommen soll, die Möglichkeit, die für die Aufnahme der Zugkräfte relevanten Bereiche des Zinkenträgers 7 mit dickeren Wandungen auszugestalten.

In Fig. 1 ist des Weiteren ein Kniehebel 11 zu erkennen, der einen vorderen Kniehebelarm 3 und einen hinteren Kniehebelarm 4 aufweist, die über ein Kniehebelgelenk 5 gelenkig miteinander verbunden sind. Bei der gezeigten Ausführungsform besteht der vordere Kniehebelarm 3 aus insgesamt drei nicht näher bezeichneten länglichen flachen Bauteilen, während der hintere Kniehebelarm 4 aus insgesamt zwei nicht näher bezeichneten flachen Bauteilen besteht. Alternativ können die Kniehebelarme 3 und 4 jeweils aus einer anderen Anzahl flacher Bauteile bestehen oder als Gussteile ausgestaltet sein. Wie gezeigt ist, ist der hintere Kniehebelarm 4 wesentlich kürzer als der vordere Kniehebelarm 3. Vorzugsweise beträgt die Länge des hinteren Kniehebelarms 4 gleich oder weniger als ein Drittel der Länge des vorderen Kniehebelarms 3. Das von dem Kniehebelgelenk 5 abgewandte Ende des hinteren Kniehebelarms 4 ist über ein Gelenk 28 gelenkig mit dem Zinkenträger 7 bzw. den beiden Trägerplatten 9 und 10 verbunden.

Die in Fig. 1 gezeigte Halterung 20 bildet bei der gezeigten Ausführungsform einen Bestandteil der Vorrichtung 1 und dient zu deren Befestigung an einem so genannten Balken, der seinerseits an einem Zugfahrzeug befestigt wird. Mehrere in Fahrtrichtung nebeneinander und/oder hintereinander angeordnete Vorrichtungen 1 bilden zusammen mit den jeweils zugehörigen Balken einen so genannten Grubber. Der in Fahrtrichtung vordere Kniehebelarm 3 ist mit seinem von dem Kniehebelgelenk 5 abgewandten Ende über ein Gelenk 29 gelenkig mit der Halterung 20 verbunden. Darüber hinaus ist der Zinkenträger 7 mit seinen beiden Trägerplatten 9 und 10 gelenkig über ein Gelenk 30 mit der Halterung 20 verbunden.

Die Fig. 2 und 3 zeigen zwei verschiedene Stellungen der Vorrichtung 1. In Fig. 2 ist die Arbeitsstellung dargestellt, in welcher der Zinken 2 mit seiner Schmalschar 24 und seiner Flügelschar 25 in das aufzulockernde Erdreich eingreift und dieses in einer bestimmten Solltiefe durchfährt. In Fig. 3 ist die Vorrichtung 1 in ihrer ausgelösten Stellung bzw. in ihrer Ausweichstellung dargestellt, in welcher der Zinken 2 entgegen der Wirkung der Federkraft der Druckfeder 6 einem Hindernis im Erdreich ausgewichen ist. In den Fig. 2 und 3 ist gut zu erkennen, dass die Längsachse der Druckfeder 6, d.h. die Wirkungslinie der von der Druckfeder 6 erzeugten Druckkraft, im Wesentlichen durch das Kniehebelgelenk 5 verläuft. Hierzu stützt sich das dem Kniehebelgelenk 5 zugewandte Ende der Druckfeder 6 an einer Stützplatte 31 ab, die an dem vorderen Kniehebelarm 3 befestigt ist.

Da der vordere Kniehebelarm 3 wesentlich länger ist als der hintere Kniehebelarm 4, findet während der Bewegung des Zinkens 2 zwischen der Arbeitsstellung und der Ausweichstellung nur eine verhältnismäßig geringe Relativbewegung zwischen dem Zinkenträger 7 einerseits und dem vorderen Kniehebelarm 3 andererseits statt. Dies ermöglicht in vorteilhafter Weise die Anordnung des dem Kniehebel 11 zugewandten Endes der Druckfeder 6 an dem vorderen Kniehebelarm 3 im Bereich des Kniehebelgelenks 5 ohne ein Drehlager.

In der Arbeitsstellung gemäß Fig. 2 ist der Kniehebel 11 fast vollständig gestreckt, so dass der vordere Kniehebelarm 3 und der hintere Kniehebelarm 4 einen nahezu, jedoch nicht exakt geradlinigen Verlauf aufweisen. In der Arbeitsstellung liegt das in Fig. 2 untere Ende der Druckfeder 6 seitlich an der Wandung 13 des Zinkenträgers 7 an. In der die Ausweichstellung zeigenden Fig. 3 ist zu erkennen, dass das von dem Kniehebelgelenk 5 abgewandte Ende der Druckfeder 6 an der Wandung 15 des Zinkenträgers 7 anliegt. Das von dem Kniehebelgelenk 5 abgewandte Ende der Druckfeder 6 ist somit im Rahmen des Abstandes der Wandungen 13 und 15 frei beweglich gelagert. Hierdurch wird gewährleistet, dass die Wirkungslinie der Federkraft der Druckfeder 6 auch in der Ausweichstellung im Wesentlichen durch das Kniehebelgelenk 5 verläuft. Die verhältnismäßig geringe Relativbewegung zwischen dem Zinkenträger 7 einerseits und dem vorderen Kniehebelarm 3 andererseits führt dazu, dass die freie Beweglichkeit des dem Kniehebelgelenk 5 abgewandten Endes der Druckfeder 6 zwischen den Wandungen 13 und 15 nur in entsprechend geringem Umfang vorgesehen werden kann.

Alternativ ist denkbar, das von dem Kniehebelgelenk 5 abgewandte Ende der Druckfeder 6 unbeweglich in dem Zinkenträger 7 zu lagern und das dem Kniehebelgelenk 5 zugewandte Ende der Druckfeder 6 gelenkig mit dem vorderen Kniehebelarm 3 zu verbinden. Dies kann beispielsweise durch eine gelenkige Befestigung der Stützplatte 31 an dem Kniehebelarm 3 erfolgen.

In den Fig. 2 und 3 ist des Weiteren ein stiftförmiger Anschlagvorsprung 21 zu erkennen, der an dem hinteren Kniehebelarm 4 angeordnet ist. In der Arbeitsstellung gemäß Fig. 2 schlägt der Anschlagvorsprung 21 an einer in der Fig. 3 gekennzeichneten Anschlagfläche 23 an, die an dem vorderen Kniehebelarm 3 vorgesehen ist. In der Ausweichstellung gemäß Fig. 3 schlägt der Anschlagvorsprung 21 an der in Fig. 2 gekennzeichneten Anschlagfläche 22 an, die ebenso an dem vorderen Kniehebelarm 3 angeordnet ist. Das Zusammenwirken des Anschlagvorsprungs 21 mit den Anschlagflächen 22 und 23 legt somit den maximalen Relativschwenkwinkel zwischen dem Kniehebelarm 3 und dem Kniehebelarm 4 fest. Damit wird auch der maximale Schwenkwinkel des Zinkenträgers 7 samt Zinken 2, Schmalschar 24 und Flügelschar 25 um die Achse des Gelenks 30 festgelegt.

In der Arbeitsstellung gemäß Fig. 2 wird der Zinkenträger 7 von einem beidseitig aus der Halterung 20 hervorstehenden Absteckbolzen 33 gehalten, der als Stützvorsprung im Sinne der vorliegenden Erfindung fungiert. Die von dem Absteckbolzen 33 auf den Zinkenträger 7 ausgeübte Haltekraft wirkt der Federkraft der Druckfeder 6 entgegen, entlastet dadurch den Anschlagvorsprung 21 und schützt ihn somit vor frühzeitigem Verschleiß.

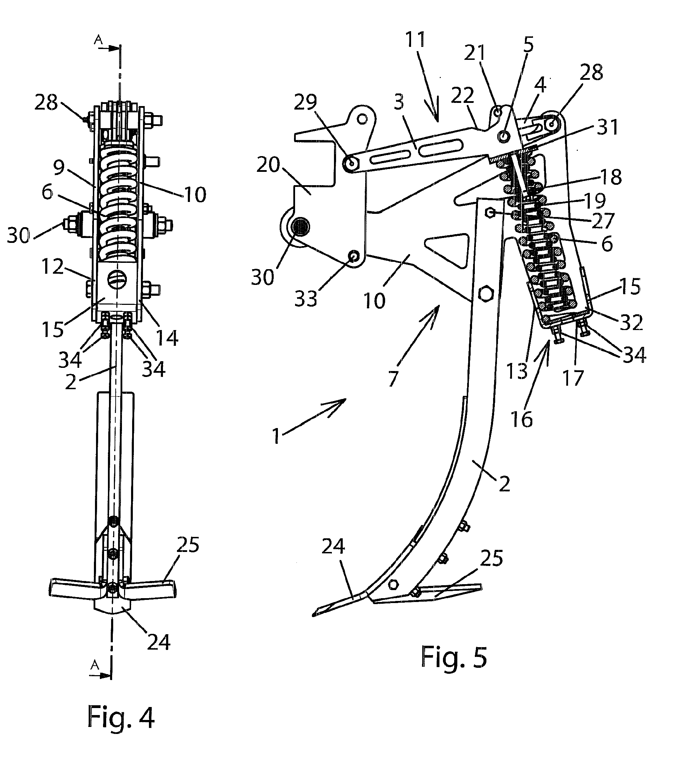

Fig. 4 zeigt eine Ansicht der in Fig. 1 dargestellten Vorrichtung 1 in der gedachten Fahrtrichtung eines die Vorrichtung 1 ziehenden Zugfahrzeugs gesehen. Die Blickrichtung der Fig. 4 ermöglicht einen guten Einblick in den in dem Zinkenträger 7 vorhandenen Aufnahmehohlraum 8 zur Aufnahme der Druckfeder 6. Wie sich insbesondere aus den Fig. 4 und 1 ergibt, ist es nicht zwingend erforderlich, dass der Aufnahmehohlraum 8 vollständig geschlossen ist. Es ist im Sinne der vorliegenden Erfindung ausreichend, zu gewährleisten, dass die Druckfeder 6 stets sicher in dem Aufnahmehohlraum 8 geführt und gelagert ist.

Der in Fig. 4 gekennzeichnete Schnitt A-A ist in Fig. 5 dargestellt, welche die Lagerung der Druckfeder 6 in dem Aufnahmehohlraum 8 genauer zeigt. Zusätzlich zu der als Spiralfeder ausgebildeten Druckfeder 6 ist bei der gezeigten Ausführungsform eine weitere ebenso als Spiralfeder ausgebildete Druckfeder 19 vorgesehen, welche innerhalb der Druckfeder 6 angeordnet ist. Aus der Stützplatte 31 ragt ein Führungsstift 18 heraus, der in das Innere der weiteren Druckfeder 19 eingreift und somit das dem Kniehebelgelenk 5 zugewandte Ende des Druckfederpaares 6,19 sicher führt und hält.

Das in Fig. 5 untere Ende des Druckfederpaares 6,19 ist mit Hilfe einer Lagerplatte 32 gelagert, die bei der gezeigten Ausführungsform mittels vier Stellschrauben 34 auf der Innenseite des Steges 17 des U-förmig gebogenen Abstützteils 16 befestigt ist. Die Lagerplatte 32 kann mit Hilfe der Stellschrauben 34 in Längsrichtung des Druckfederpaares 6,19 aus der in Fig. 5 gezeigten Lage bewegt und dementsprechend von dem Steg 17 des Abstützteils 16 beabstandet werden. Auf diese Weise wird die Vorspannung des Druckfederpaares 6,19 und damit die Auslöse- sowie die Rückstellkraft der Vorrichtung 1 eingestellt.

In der in Fig. 5 gezeigten Arbeitsstellung der Vorrichtung 1 hat ausschließlich die unterste Windung der äußeren Druckfeder 6 Kontakt mit der Lagerplatte 32. Die weitere Druckfeder 19 ist kürzer als die in der Arbeitsstellung vorgespannte Druckfeder 6 und wird erst dann komprimiert, wenn auch die unterste Windung der Druckfeder 19 während der Schwenkbewegung des Zinkenträgers 7 von der Arbeitsstellung in die Ausweichstellung in Kontakt mit der Lagerplatte 32 kommt. Auf diese Weise wird die aus der zunehmend komprimierten Druckfeder 6 resultierende Rückstellkraft ab einem gewissen Zeitpunkt während der Schwenkbewegung des Zinkenträgers 7 zusätzlich erhöht. Dies stellt sicher, dass der Zinken 2 nach dem Überwinden des Hindernisses in dem Erdreich möglichst schnell wieder in seine Arbeitsstellung schwenkt. Dies hat den Vorteil, dass die Fläche nicht aufgelockerter Erdreichbereiche hinter bereits überwundenen Hindernissen auch bei relativ hohen Geschwindigkeiten des Zugfahrzeuges möglichst gering bleibt.

Alternativ kann mit Hilfe der Stellschrauben 34 die Lagerplatte 32 derart eingestellt werden, dass das in Fig. 5 untere Ende der weiteren Druckfeder 19 bereits in der Arbeitsstellung drucklosen Kontakt mit der Lagerplatte 32 hat oder die Druckfeder 19 darüber hinaus in der Arbeitsstellung schon komprimiert wird. Im Übrigen ist auch denkbar, die Länge der weiteren Druckfeder 19 so zu wählen, dass sie bereits bei der in Fig. 5 gezeigten Lage der Lagerplatte 32 komprimiert wird.

Wie insbesondere in den Fig. 1 bis 3 und 5 zu erkennen ist, befindet sich die Druckfeder 6 bzw. das Druckfederpaar 6,19 auf der dem Erdreich zugewandten Seite des Kniehebels 11. Durch diese Anordnung des Druckfederpaares 6,19 sowie die taschenartige Gestaltung des Zinkenträgers 7, in welchem sich der Aufnahmehohlraum 8 zur Lagerung des Druckfederpaares 6,19 befindet, wird gewährleistet, dass selbst dann, wenn beispielsweise eine der Trägerplatten 9 oder 10 brechen sollte oder sich das Abstützteil 16 von den Trägerplatten 9, 10 lösen sollte, das Druckfederpaar 6, 19 nicht nach oben in die Umgebung geschleudert wird, sondern stattdessen nach nur kurzer Freiflugbahn auf das Erdreich trifft und dort stecken bleibt. In der Umgebung befindliche Personen oder Gegenstände sind somit zuverlässig vor Verletzungen oder Beschädigungen geschützt.

### BEZUGSZEICHENLISTE

- 1: Vorrichtung
- 2: Zinken
- 3: Vorderer Kniehebelarm
- 4: Hinterer Kniehebelarm
- 5: Kniehebelgelenk
- 6: Druckfeder
- 7: Zinkenträger
- 8: Aufnahmehohlraum
- 9: Trägerplatte
- 10: Trägerplatte
- 11: Kniehebel
- 12: Wandung
- 13: Wandung
- 14: Wandung
- 15: Wandung
- 16: Abstützteil
- 17: Steg
- 18: Führungsstift
- 19: Weitere Druckfeder
- 20: Halterung
- 21: Anschlagvorsprung
- 22: Anschlagfläche
- 23: Anschlagfläche
- 24: Schmalschar
- 25: Flügelschar
- 26: Schraube
- 27: Schraube (Scherbolzen)
- 28: Gelenk
- 29: Gelenk
- 30: Gelenk
- 31: Stützplatte
- 32: Lagerplatte
- 33: Absteckbolzen
- 34: Stellschraube

## Patentansprüche

1. Vorrichtung zum Auflockern von Erdreich, umfassend wenigstens einen Zinken (2), wenigstens einen Kniehebel (11) aufweisend einen vorderen Kniehebelarm (3) und einen hinteren Kniehebelarm (4), die über ein Kniehebelgelenk (5) gelenkig miteinander verbunden sind, sowie wenigstens eine Druckfeder (6), die mit ihrem einen Ende an dem Kniehebel (11) angreift, wobei der Zinken (2) zwischen einer Arbeitsstellung, in welcher er mit einer Arbeitstiefe in das Erdreich eindringen kann und in welcher die Druckfeder (6) den Kniehebel in einer ersten Stellung hält, und einer Ausweichstellung, in welcher er entgegen der Federkraft der Druckfeder (6) einem Hindernis in dem Erdreich ausweichen kann und in welcher sich der Kniehebel in einer zweiten Stellung befindet, bewegbar ist,
**dadurch gekennzeichnet, dass**
wenigstens ein Zinkenträger (7) vorgesehen ist, der den Zinken (2) trägt und einen Aufnahmehohlraum (8) zur Aufnahme der Druckfeder (6) aufweist, in welchem die Druckfeder (6) derart gelagert ist, dass der Zinkenträger (7) diejenigen Zugkräfte aufnimmt, die zur Aufrechterhaltung der Federkraft der Druckfeder (6) in der Arbeitsstellung und in der Ausweichstellung des Zinken (2) erforderlich sind.

2. Vorrichtung nach Anspruch 1,
**dadurch gekennzeichnet, dass**
der Zinkenträger (7) zwei im Wesentlichen parallel zueinander angeordnete Trägerplatten (9, 10) umfasst, zwischen denen sich der Aufnahmehohlraum (8) befindet.

3. Vorrichtung nach Anspruch 1 oder 2,
**dadurch gekennzeichnet, dass**
der Aufnahmehohlraum (8) zumindest in demjenigen Bereich, der zur Aufnahme des dem Kniehebel (11) abgewandten Endes der Druckfeder (6) bestimmt ist, allseitig Wandungen (12, 13, 14, 15) zur Führung des dem Kniehebel (11) abgewandten Endes der Druckfeder (6) aufweist.

4. Vorrichtung nach Anspruch 2 und 3,
**dadurch gekennzeichnet, dass**
zwei (12, 14) der Wandungen (12, 13, 14, 15) zur Führung des dem Kniehebel (11) abgewandten Endes der Druckfeder (6) von Teilbereichen der Trägerplatten (9, 10) gebildet werden.

5. Vorrichtung nach Anspruch 4 oder Anspruch 2 und 3,
**dadurch gekennzeichnet, dass**
zwei (13, 15) der Wandungen (12, 13, 14, 15) zur Führung des dem Kniehebel (11) abgewandten Endes der Druckfeder (6) von den Schenkeln eines U-förmig gebogenen Abstützteils (16) gebildet werden, wobei der die beiden Schenkel verbindende Steg (17) des Abstützteils (16) das dem Kniehebel (11) abgewandte Ende der Druckfeder (6) abstützt.

6. Vorrichtung nach einem der vorangehenden Ansprüche,
**dadurch gekennzeichnet, dass**
die Druckfeder (6) auf der dem Erdreich zugewandten Seite des Kniehebels (11) angeordnet ist.

7. Vorrichtung nach einem der vorangehenden Ansprüche,
**dadurch gekennzeichnet, dass**
das dem Kniehebel (11) zugewandte Ende der Druckfeder (6) mittels wenigstens eines in sie eingreifenden Führungsstiftes (18) geführt ist.

8. Vorrichtung nach einem der vorangehenden Ansprüche,
**dadurch gekennzeichnet, dass**
zusätzlich zu der Druckfeder (6) eine weitere Druckfeder (19) vorgesehen ist, die in der Arbeitsstellung des Zinken (2) drucklos ist und erst während der Bewegung des Zinken (2) von seiner Arbeitsstellung in seine Ausweichstellung beginnt, eine zusätzliche Druckkraft auf den Kniehebel (11) auszuüben.

9. Vorrichtung nach Anspruch 8,
**dadurch gekennzeichnet, dass**
die weitere Druckfeder (19) innerhalb der Druckfeder (6) angeordnet ist.

10. Vorrichtung nach Anspruch 9 in Verbindung mit Anspruch 7,
**dadurch gekennzeichnet, dass**
der Führungsstift (18) in die weitere Druckfeder (19) eingreift.

11. Vorrichtung nach einem der vorangehenden Ansprüche,
**dadurch gekennzeichnet, dass**
das von dem Kniehebelgelenk (5) abgewandte Ende des hinteren Kniehebelarms (4) gelenkig mit dem Zinkenträger (7) verbunden ist.

12. Vorrichtung nach einem der vorangehenden Ansprüche,
**dadurch gekennzeichnet, dass**
der Zinkenträger (7) gelenkig mit einer Halterung (20) zur Befestigung an einem Balken verbunden ist.

13. Vorrichtung nach Anspruch 12,
**dadurch gekennzeichnet, dass**
das von dem Kniehebelgelenk (5) abgewandte Ende des vorderen Kniehebelarms (3) gelenkig mit der Halterung (20) verbunden ist.

14. Vorrichtung nach einem der vorangehenden Ansprüche,
**dadurch gekennzeichnet, dass**
der hintere Kniehebelarm (4) einen Anschlagvorsprung (21) aufweist, der in der ersten Stellung des Kniehebels (11) an einer ersten Anschlagfläche (22) des vorderen Kniehebelarms (3) und in der zweiten Stellung des Kniehebels (11) an einer zweiten Anschlagfläche (23) des vorderen Kniehebelarms (3) anschlägt, so dass er den maximalen Relativschwenkwinkel zwischen dem vorderen Kniehebelarm (3) und dem hinteren Kniehebelarm (4) begrenzt.

15. Vorrichtung nach Anspruch 14 in Verbindung mit Anspruch 12 oder 13,
**dadurch gekennzeichnet, dass**
die Halterung (20) einen Stützvorsprung (33) aufweist, der den Zinkenträger (7) in der Arbeitsstellung entgegen der Wirkung der Druckfeder (6,19) abstützt und **dadurch** den Anschlagvorsprung (21) entlastet.

16. Vorrichtung nach einem der vorangehenden Ansprüche,
**dadurch gekennzeichnet, dass**
der Kniehebel (11) in seiner ersten Stellung fast vollständig gestreckt ist, so dass der vordere Kniehebelarm (3) und der hintere Kniehebelarm (4) nahezu, jedoch nicht exakt geradlinig verlaufen.

17. Vorrichtung nach einem der vorangehenden Ansprüche,
**dadurch gekennzeichnet, dass**
sich das dem Kniehebel (11) abgewandte Ende der Druckfeder (6,19) an einer Lagerplatte (32) abstützt, die mit Hilfe von Stellmitteln (34) in Längsrichtung der Druckfeder (6,19) bewegbar ist, so dass die Auslöse- bzw. Rückstellkraft zum Auslösen der Bewegung des Zinken (2) von der Arbeitsstellung in die Ausweichstellung bzw. zum Zurückbewegen des Zinken (2) von der Ausweichstellung in die Arbeitsstellung einstellbar ist, ohne dabei die Stellung des Zinken (2) zu verändern.

## Geänderte Patentansprüche

### Geänderte Patentansprüche gemäss Regel 137(2) EPÜ.

**1.** Vorrichtung zum Auflockern von Erdreich, umfassend wenigstens einen Zinken (2), wenigstens einen Kniehebel (11) aufweisend einen vorderen Kniehebelarm (3) und einen hinteren Kniehebelarm (4), die über ein Kniehebelgelenk (5) gelenkig miteinander verbunden sind, sowie wenigstens eine Druckfeder (6), die mit ihrem einen Ende an dem Kniehebel (11) angreift, wobei der Zinken (2) zwischen einer Arbeitsstellung, in welcher er mit einer Arbeitstiefe in das Erdreich eindringen kann und in welcher die Druckfeder (6) den Kniehebel in einer ersten Stellung hält, und einer Ausweichstellung, in welcher er entgegen der Federkraft der Druckfeder (6) einem Hindernis in dem Erdreich ausweichen kann und in welcher sich der Kniehebel in einer zweiten Stellung befindet, bewegbar ist,
**dadurch gekennzeichnet, dass**
wenigstens ein Zinkenträger (7) vorgesehen ist, der den Zinken (2) trägt, zusammen mit dem Zinken (2) zwischen der Arbeitsstellung und der Ausweichstellung verschwenkbar ist und einen Aufnahmehohlraum (8) zur Aufnahme der Druckfeder (6) aufweist, in welchem die Druckfeder (6) derart gelagert ist, dass der Zinkenträger (7) diejenigen Zugkräfte aufnimmt, die zur Aufrechterhaltung der Federkraft der Druckfeder (6) in der Arbeitsstellung und in der Ausweichstellung des Zinken (2) erforderlich sind.
